# EUROPEAN PATENT APPLICATION

(11) **EP 1 598 236 A1**
(43) Date of publication of application: **23.11.2005**
(21) Application number: 04252985.9
(22) Date of filing: 21.05.2004
(51) Int. Cl.: B60P 3/035

(54) **Spooler for coiled tubing**

(71) Applicant: BJ SERVICES COMPANY, Houston, TX 77092 (US)
(72) Inventor: Briek, Willem J., 7841 GC Sleen (NL); Prins, Geert, 7891 DT Klazienaveen (NL)
(74) Representative: Akers, Noel James

(57) **Abstract**

An apparatus for transporting a reel of coiled tubing is described. The apparatus may have a first trailer section and a second trailer section, with a spooler located therebetween. The spooler may support the reel of coiled tubing such that the reel axis is substantially parallel to the trailer axis. The spooler may have a pair of pedestals moveable within channels on a base so that the spooler may accommodate reels of different lengths, and may have pedestal extension so that the spooler may accommodate reels of different diameters. The platform may also have a recess so that the overall height of the reel and the spooler do not exceed limits for existing surface thoroughfares. A method of transporting coiled tubing reels is also provided.

## Description

### BACKGROUND OF THE INVENTION

### Field of the Invention

The present invention relates generally to an assembly for use in transporting devices to sites of wellbores. More particularly, this invention relates to a spooler adapted to transport, via a trailer, relatively large reels of coiled tubing to a well site via existing surface thoroughfares.

### Description of the Related Art

Coil tubing is a continuous length of steel pipe that is spooled onto a reel and is used to carry out certain services on locations. Coiled tubing may better suited for performing various downhole tasks, such as when performing many reservoir stimulation techniques, as opposed to using solid drill string. Various sizes of coiled tubing are presently utilized. In the past, ¾" diameter coiled tubing has been provided on a reel or drum and transported to a desired location, such as a predetermined wellhead at a well site. Over the years, coiled tubing of various sizes has been utilized to perform various functions. The following standard sizes are presently utilized: 1", 1 1/4", 1.5", 1.75", 2", 2 3/8" and 2 7/8". The selection of the size of coiled tubing is dependent upon the particular job and the particular well for the operation being performed, such as stimulation, etc.

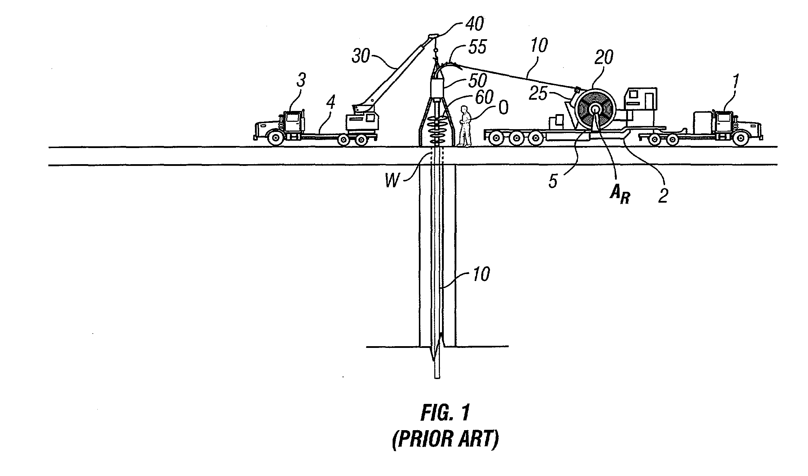

An example of a typical configuration of a coiled tubing operation is shown in Figure 1. A truck 1 transports trailer 2 to the desired wellhead W. Coiled tubing 20 is spooled around reel 20, or drum, or spool. Although the terms drum, spool, reel drum, and reel may be utilized interchangeably in the field, the term "reel" will be utilized herein without limiting the disclosure. Reel 20 is supported on a trailer 2 via a spooler 5, which allows the coiled tubing to be selectively spooled and unspooled on reel 20. The spooler 5 is secured to the surface of the trailer 2.

As can be seen in Figure 1, the spooler 5 supports the reel 20 such that the axis A_{R} of the reel 20 is perpendicular to the axis running along the length of the trailer 2. As such, the coiled tubing 10 may be unspooled in a line substantially parallel with the axis of running the length of the trailer 2. A levelwind is 25 is provided to facilitate the spooling and unspooling of the coiled tubing 10 on and off of reel 20.

To inject coiled tubing 10 into the wellbore, an injector assembly having an injector head 50 and a blow out preventer 60 ("BOP") typically is attached to a wellhead at surface of a wellbore W, the BOP acting as a safety precaution. In a typical coiled tubing operation, coiled tubing 10 is injected downhole through a wellhead W by a coiled tubing injector 50. The injector 50 operates to unspool the coiled tubing 10 from the reel 20 or drum and to inject the coiled tubing 10 into the wellbore via facing drive rollers on the injector 50. A gooseneck 55 acts to guide the coiled tubing 10 into the injector 50.

A second truck 3 and trailer 4 may be utilized to provide a crane 30 to the wellhead W to facilitate the placement of the injector 50 and blow out preventer 60 at the wellhead W.

Once the coiled tubing 10 is injected into the well, a desired wellbore operation may be performed, such as the injection of frac fluids into the wellbore.

Once the BOP 60 and injector 50 are attached to the wellhead W, the coiled tubing 10 is unspooled from the reel 20 into the wellbore and injected via the wellhead W and the wellbore treatment operation, such performing a fracing operation, e.g. may then be performed.

Typical drums or reels 20 known to be utilized in coiled tubing operations may be 134" (3.4 meters) in diameter and 70" (1.78 meters) measured between the ends of the reel 20. Such a reel 20 may accommodate 5600 meters in linear length of 1 ½" coiled tubing. Such prior art reels may be transported to a desired wellhead W by placing the reel 20 and the spooler 5 on the trailer 2. Existing surface thoroughfares (e.g. roads) may be utilized, as the overall width and height of the reel 20 on the spooler 5 on the trailer 2 do not exceed existing limits.

Transportation costs associated with taking a reel of coiled tubing to a wellhead may be significant in some circumstances. Thus, it is desirable to transport a maximum linear length of coiled tubing in a single reel to minimize transportation costs. Thus, it is desirable to provide an apparatus for transporting a relatively large diameter reel of coiled tubing to a wellhead.

Recently, it has been desired to utilize coiled tubing having a diameter of 2 3/8" (i.e. using a 2 3/8" coil). The 2 3/8" coil may be utilized to stimulate production in gas wells, for example, or to perform various other well treatments, such as underbalanced drilling known to those of skill in the art. These techniques may utilize special drilling tools capable of drilling horizontally from the existing bore, for which 2 3/8" coil tubing is desirable.

However, to utilize this coiled tubing having relatively larger cross-sections (e.g. 2 3/8" or greater), reels or drums having larger widths, lengths, and diameters are needed to accommodate the same linear length of coiled tubing. As the diameter of the coiled tubing has increased, so has the diameter (and distances between the ends) of the reels needed for storing and transporting a given length of coiled tubing string. For example, in some configurations, it is known to utilize a reel 4.6 meters in diameter adapted to accommodate an average of 5,400 meters of 2 3/8" coiled tubing. When placed on an existing trailer, the overall height of the reel and the trailer is approximately five meters, which may exceed limitations for transportation along existing surface thoroughfares.

The diameter of the reel may be limited if it is desired to transport like reel via existing thoroughfares. For example, the current regulations, such as those promulgated by Dutch Road Authorities, allow transportation on existing thoroughfares of a truck having a maximum having a height of four (4) meters, maximum width of three (3) meters, and a load per axle of 10 tonnes, without requiring a special permit. A minor special permit is required under these regulations, for vehicles having a maximum height of four (4) meters, and a maximum width less than 3.5 meters. A major special permit - requiring transportation with a police escort, closing roads to traffic, paying fees, etc. - is required for vehicles having a width in 3.5 meters or greater. It is desirable to avoid the latter requirement, if possible.

One possible method to reduce transportation costs per length of coiled tubing is to increase the diameter of the reels used to transport the 2 3/8" coiled tubing such that these larger reels accommodate a desirable linear length of coiled tubing (e.g. 6500 meters in length). It has been discovered that to accommodate the desirable 6500 meters of 2 3/8" coiled tubing, a reel having a length of five (5) meters and a diameter of 3.498 meters may be needed. However, transporting these reels has proven problematic in some situations. For instance, if the larger diameter reels are placed on existing trailers for surface transportation, the overall width and height of the reels and trailer exceed current limits for traveling on existing thoroughfares. As such, a major special permit (which may require excessive fees, police escort, etc.) may be required, in some instances, adding to the cost and time associated with coiled tubing throughout. In other situations, even special permits are not allowed, as these larger reels are too large for surface transport, and transportation by road and existing thoroughfares is only possible if obstacles for the width and height of the load are not encountered.

Thus, the larger coiled tubing reels are transported via oversized equipment on backroads to water transport, loaded onto a boat or barge, transported by water such as a canal to a port relatively close to the wellhead, and transferred to another surface transport to take the reel via backroads to the wellhead. This water transport and associated transfers increases the costs and time associated with transporting the reel to the wellhead.

Again, the cost of transporting these relatively large reels by water, transferring the reels from boat to trailer and vice versa similarly increases the time and cost associated with getting the desired length of coiled tubing to the desired wellhead.

Another option is to utilize a "split reel" arrangement. These split reels typically have a diameter of 4.2 meters or greater. For example, to accommodate reels of 6000 meters of 2 3/8" coiled, reels having a diameter of 5.18 meters and 2.76 meters as measured between the ends are needed. When utilizing a split reel, three loads are typically transported to the wellhead. The coiled tubing is transported via a drum (typically 5.18 meters in diameter and 2.76 meters measured from end to end), and two oversized loads requiring special permits (an oversized frame and protective frames) are transported via water. The three loads are then assembled to provide the coiled tubing on a single reel at the wellhead. This option may necessitate the use of a 200 tonne crane at the wellhead to load the drum of coiled tubing into the reel, once the split reels are joined. The required assembly at the wellhead further increases the time and cost associated with transporting the larger reel to the wellhead.

Thus, a need exists to provide a means to transport a desired linear length (e.g. 6000 meters, 25,000 ft. or greater) of 2 3/8" or larger coiled tubing to a wellhead utilizing existing surface thoroughfares, without the need for obtaining major special permits, police escorts, etc. Such an apparatus would desirably transport a reel without requiring excessive assembly of the wellhead. It is also desirable to provide a single apparatus adapted to transport the larger reels such that assembly at the wellhead is minimized.

Further, it would be desirable to design a spooler unit capable of transporting these relatively large reels via existing surface thoroughfares and roadways.

The present invention is directed to overcoming, or at least reducing the effects of, one or more of the issues set forth above.

### SUMMARY OF THE INVENTION

The invention relates to work performed with coiled tubing, the coiled tubing being injected into the wellbore by an injector of an injector assembly.

In some embodiments, a spooler is described whereby the spooler is integrated within a recess in the base of the spooler. Two trailer sections are described which are adapted to transport the spooler to the wellhead, enabling road transportation of a reel with 6,500 meters of 2 3/8" tubing via existing thoroughfares.

The spooler may be built in such a way that a reel can be placed in the length of the spooler and between the trailer sections. A reel having a length of five meters with a diameter of 3.498 meters may be transported such that a major special permit (and/or associated police escort, etc.) for this width is not required, as described above. Only a minor special permit is needed for widths above three meters and less than 3.5 meters. Such minor special permits, if needed, may be obtained relatively easily as the width (diameter) does not exceed the 3.50-meter limit.

In some embodiments, the spooler is adapted to be transported by connection to two trailer sections. In some aspects, one trailer section at the rear may have four axles and one trailer section at the front may have two axles at the front. The spooler may be connected between the trailer sections and pulled by a tractor or truck, for example.

In some embodiments, the axles on the trailer sections operate to navigate to place the spooler at a precise location near the wellhead: the wheels on the axles are adapted to rotate with respect to the trailer axis. The wheels on the front trailer section preferably rotate up to 72 degrees, while the wheels on axles of the rear trailer section may be rotated 65 degrees, for example. In some aspects, the trailer sections are also described as being liftable, by hydraulic actuators for example, such that each trailer section may be raised to a height of 57.5 centimeters, e.g., from surface. The actuators are also described as being capable of lowering the spooler onto the ground, whereby it is possible to uncouple the first and second trailer sections to release the spooler at the wellhead. In some instances, the first and second trailer sections are then connectable such that the trailer sections may then be transported to another location, leaving the spooler at the wellhead. The first and second trailer sections may then be coupled to another spooler, if desired. In some embodiments, it is also possible to place another bed in between the first and second trailer sections enabling the bed and trailer sections to carry out heavy transportation. The net capacity is 61 tonnes in some embodiments.

In some embodiments, a spooler trailer for transporting a reel of coiled tubing is described having a first trailer section, a spooler having a first pedestal and a second pedestal adapted to mount the reel of coiled tubing therebetween along a reel axis, and a second trailer section, the first and second trailer defining a longitudinal trailer axis therethrough, wherein the spooler is selectively connectable to the first and second trailer sections such that the reel axis is substantially parallel to the longitudinal trailer axis. In some embodiments the distance between the pedestals is variable so that reels of different lengths may be accommodated. In some embodiments, pedestal extensions are provided such that the spooler trailer may accommodate reels of different diameters.

In some embodiments, a spooler for a reel of coiled tubing is described having a first pedestal and a second pedestal adapted to mount a reel of coiled tubing therebetween along a reel axis, wherein the spooler is selectively connectable to a trailer having a longitudinal axis, such that the reel axis is substantially parallel to the longitudinal trailer axis, such that when the coiled tubing is unspooled from the reel, the coiled tubing is substantially perpendicular to the trailer axis.

A method of transporting a reel of coiled tubing is described as providing a spooler trailer having a first trailer section and a second trailer section with a spooler selectively connectable therebetween, the reel of coiled tubing being rotatably mounted to the spooler such that the axis of the reel is substantially parallel to the axis of the trailer; transporting the spooler trailer to a predetermined location; lowering the first and second trailer sections until the spooler trailer contacts surface; and disconnecting the spooler from the first and second sections.

Additional objects, features and advantages will be apparent in the additional written description that follows.

### BRIEF DESCRIPTION OF THE DRAWINGS

The following figures form part of the present specification and are included to further demonstrate certain aspects of the present invention. The invention may be better understood by reference to one or more of these figures in combination with the detailed description of the specific embodiments presented herein.

Figure 1 shows a prior art system for injecting coiled tubing at a wellhead.

Figure 2A shows a top view of one embodiment of the present invention having a spooler between a first trailer section and a second trailer section.

Figure 2B shows a side view of the embodiment of Figure 2A.

Figure 3A shows an embodiment of the present invention having a spooler adapted to accommodate a second reel of a large diameter of coiled tubing on the spooler between a first and second trailer section.

Figure 3B shows a side view of the embodiment of Figure 3A.

Figure 4A shows a top view of one embodiment of the present invention in which the first trailer section and the second trailer section are selectively, directly connectable.

Figure 4B shows a side view of the embodiment of Figure 4A.

Figure 5A shows a side view of a spooler of one embodiment of the present invention.

Figure 5B shows a top view of the embodiment of Figure 5A.

Figure 6 shows a side view of various components of a spooler of one embodiment of the present invention, including safety rail extensions and a levelwind.

Figure 7 shows a simplified side view of one embodiment of the present invention having notches in the rails.

While the invention is susceptible to various modifications an alternative forms, specific embodiments have been shown by way of example in the drawings and will be described in detail herein. However, it should be understood that the invention is not intended to be limited to the particular forms disclosed. Rather, the intention is to cover all modifications, equivalents and alternatives falling within the spirit and scope of the invention as defined by the appended claims.

### DESCRIPTION OF ILLUSTRATIVE EMBODIMENTS

Illustrative embodiments of the invention are described below as they might be employed in transporting a reel of coiled tubing to a wellhead. In the interest of clarity, not all features of an actual implementation are described in this specification. It will of course be appreciated that in the development of any such actual embodiment, numerous implementation specific decisions must be made to achieve the developers' specific goals which will vary from one implementation to another. Moreover, it will be appreciated that such a development effort might be complex and time-consuming, but would nevertheless be a routine undertaking for those of ordinary skill in the art having the benefit of this disclosure. Further aspects and advantages of the various embodiments of the invention will become apparent from consideration of the following description and drawings.

The following examples are included to demonstrate preferred embodiments of the invention. It should be appreciated by those of skill in the art that the techniques disclosed in the examples which follow represent techniques discovered by the inventors to function well in the practice of the invention, and thus can be considered to constitute preferred modes for its practice. However, those of skill in the art should, in light of the present disclosure, appreciate that many changes can be made in the specific embodiments which are disclosed and still obtain a like or similar result without departing from the spirit and scope of the invention.

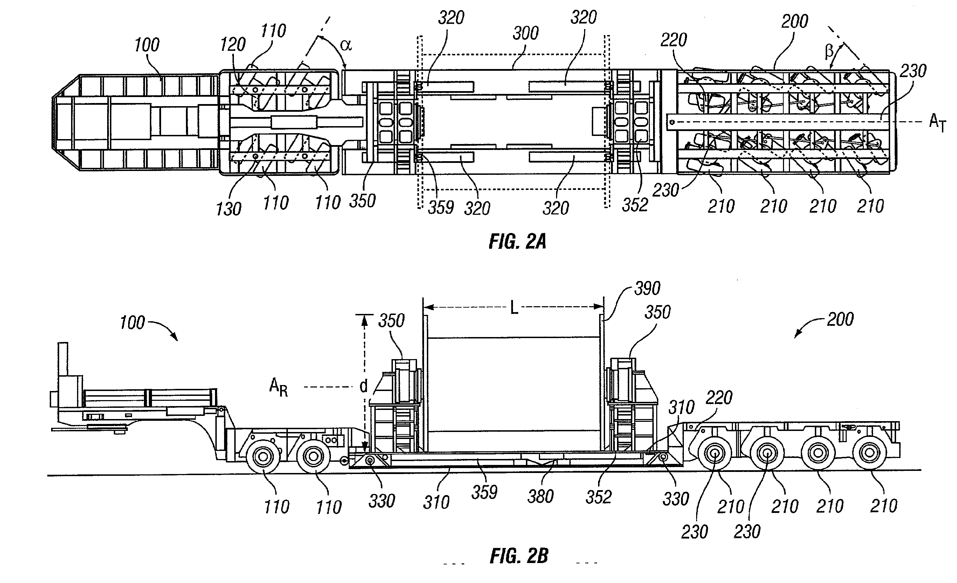

Embodiments of the invention will now be described with reference to the accompanying figures. Referring to Figures 2A and 2B, one embodiment of the present invention as shown comprising a first trailer section 100, a second trailer section 200 and a spooler 300. As shown in Figure 2B the spooler 300 is connected to each first trailer section 100 and second trailer section 200 via pins 330. Pins 330 are selectively removable to release the spooler 300 from the first and second trailer sections 100, 200, as described more fully hereinafter.

The first trailer section 100 is adapted to be connected to a truck or tractor (not shown). The first trailer section 100 has a plurality of axles 120 upon which wheels 110 are rotatably mounted. In this embodiment, the first trailer section 100 is shown having two axles 120, although any number of axles may be provided. Axles 120 are movably mounted to first trailer section 100, such that wheels 110 form an angle α with respect to an axis of the trailer A_{T}.

When being transported, angle α is substantially zero such that the trailer may be pulled behind the truck in a relatively straight line. However, when it is desired to position the first trailer section 100 near a wellhead, angle α may be altered as desired -preferably to 72 degrees -- to place the first trailer section 100 (and thus spooler 300) at a desired location near the wellhead, as described more fully hereinafter. Axles 120 of first trailer section 100 also comprise lift 130 adapted to raise and lower the first trailer section 100 with respect to the earth's surface. The lift 130 may comprise a hydraulic actuator, each wheel 110 having a lift 130 associated therewith, in some embodiments.

Spooler 300 is shown in this embodiment as selectively attached to first trailer section 100 via pins 330. Spooler 300 is comprised of two pedestals 350 attachable to a base 310. In this embodiment, on substantially the lower end of pedestals 350 are racks 352 which are slidably attachable within channels 320 within a recess 340 of spooler base 310. Substantially on the other end of pedestal 350 are flanges 354 adapted to support a reel 390 of coiled tubing between pedestals 350. Flanges 354 may further comprise a driving gear 356 to rotate reel 390 via motor 370. Drive plate 358 and bearings are also provided as described hereinafter.

As shown, the reel 390 of coiled tubing has an axis A_{R}. As shown the axis A_{R} of the reel of coiled tubing 390 is substantially parallel to the axis of the trailer A_{T}. In this embodiment, the width of each trailer section and base are 2.75 meters, so the reel 390 extends beyond the base 310 during transport.

Pedestals 350 are adapted to accommodate the reel 390 of coiled tubing having a diameter of 3.498 meters and a length of 5 meters. Thus, the reel 390 may accommodate 6500 meters of 2 3/8" coiled tubing as desired. Alternatively, the reel 390 may accommodate 3500 meters of 2 7/8" coiled tubing. Further, at least partially because the reel 390 is rotated with respect to the trailer axis of 90 degrees compared to prior art-mounted reels (as shown in Figure 1), the spooler 300 may be utilized to transport the relatively large reel 390 via existing surface thoroughfares, with only obtaining a minor special permit in some instances. The need for major special permits (police escorts, excessive fees, etc.) is reduced, and assembly at the wellhead is minimized. Thus, the cost and time required to transport the reel 390 to the wellhead is reduced. Further, the reel 390 may have a longer length "L" to accommodate even more coiled tubing as desired.

Shown more clearly in Figure 2A are channels 320 adapted to accommodate racks 352 substantially on the lower end of the pedestals 350. Racks 352 of pedestal 350 are slidable within channels 320 in recess 340 of base 310, such that the distance between pedestals 350 is variable to accommodate reels 390 having different lengths L. In some embodiments, sliding rams 359 are provided within channels 320 to assist in locating the racks 352 of pedestal 350 within the channels 320. The sliding rams 359 may be hydraulically actuated. Longitudinally, on either side of base 310, are beams or rails 360 as described hereinafter, and in some embodiments reels 390 further comprise a notch 362 for accommodating relatively large reels 390 of coiled tubing.

Second trailer section 200 in this embodiment comprises a plurality of axles 220. In this embodiment, four axles 220 are shown, although any number of axles 220 may be provided for second trailer section 200. Upon each axle 220, wheels 210 are rotatably mountable. Wheels 210 are adapted to form an angle β with longitudinal trailer axle A_{T}. Angle β may altered as desired from zero degrees. When being transported on a thoroughfare, angle β is substantially zero such that the second trailer section 200 may be pulled behind first trailer section 100 in a relatively straight manner. When it is desired to position the second trailer section 200 at a desired location near a wellhead, angle β may be increased as desired (and preferably up to 65 degrees), such that the second trailer section 200 and spooler 300 may be placed at a desired location near a wellhead.

Second trailer section 200 may further comprise lifts 230 to raise and lower the second trailer section 200 relative to the earth's surface. In some embodiments, each set of wheels 210 may comprise a lift 230. Lift 230 may comprise hydraulic actuators. As shown, the second trailer section 200 is connectable to spooler 300 via pins 330, although any connecting means could be utilized. With pins 330 connecting spooler 300 to the first trailer section 100 and second trailer section 200, spooler 300 is elevated from the earth's surface and may be transported along existing surface thoroughfares to a desired well site. In the embodiments shown on Figures 2A and 2B, reel 390 of coiled tubing comprises a length of five meters and a diameter of 3.498 meters (corresponding to the widest portion of the load on the truck). As such, a major special permit for this width is typically not required, as the diameter does not exceed 3.5 meters.

Lifts 130 and 230 in the embodiment shown in Figures 2A and 2B may comprise hydraulic lifts adapted to raise the first trailer section 100 and second trailer section 200 to a height, for example of 57.5 centimeters above the surface. Further, lifts 130 and 230 are adapted to lower the spooler 300 to place spooler 300 on the earth's surface, thus allowing the uncoupling of the first section 100 and second trailer section 200 from spooler 300 by removing pins 330. In some embodiments, the spooler 300 may be removed from between first trailer section 100 and second trailer section 200 and replaced with a flat bed B by placing the bed between first section 100 and second trailer section 200, the trailer disclosed herein may carry out heavy transportation; for example the capacity in this embodiment is 61 tonnes.

The operation of the embodiment of Figures 2A and 2B will now be described. When it is desired to transport spooler 300 to a wellhead, reel 390 of coiled tubing is mounted via a fork lift or other similar lifting devices known to one of ordinary skill in the art, between pedestals 350 via flanges 354. Reel 390 is rotatably secured between pedestals 350, pedestals 350 having racks 352 slidable within channels 320 to accommodate reel 390 having length L. In some embodiments, the pedestals 350 may be positioned in channels 320 via sliding rams 359.

Once secured, reel 390 may be locked to prevent rotation about it axis A_{R} via a reel lock 391. Reel 391 may comprise a chain and a pad lock, for example, to prevent the rotation of the reel 390 during transport. As the reel 390 is being mounted on spooler 300, spooler 300 is typically not elevated off the earth's surface.

Next, the second trailer section 200 is rolled in position via wheels 210 and positioned relative to spooler 300. Second trailer section 200 is then lowered via lifts 230, such that pin 330 may be inserted, thus connecting the second trailer section 200 to spooler 300.

Similarly, first trailer section 100 may be rolled into position relative to spooler 300. First trailer section 100 may be lowered via lifts 130, such that pins 330 may be inserted to connect first trailer section 100 to spooler 300.

Once pins 330 are inserted, first trailer section 100 and second trailer section 200 may be raised via lifts 130, 230, thus elevating spooler 300 off the earth's surface. A truck or tractor (not shown) may then be attached to first trailer section 100, thus transporting the first trailer section 100, spooler 300 and section trailer section 200 to a desired location via rotation of wheels 110 and 210. Further, it is noted that partially due to recess 340 in the base 310 of spooler 300, the spooler trailer may accommodate this reel 390 of coiled tubing having a diameter "d" of 3.498 meters along existing thoroughfares without the need to obtain permits for wide loads of 3.5 meters or more. Further, the overall height of the spooler 300 with reel in place on the trailer is 3.95 meters in transport mode, which is less than the four (4) meters over which special permits are needed for transport. Thus, the spooler trailer may then be transported on existing surface thoroughfares to a predetermined wellhead, while obtaining only a minor permit, and not requiring a major special permit, police escorts, etc.

Once the spooler is relatively close to the wellhead the spooler 300 may be positioned at a precise location near the wellhead by changing the angles α and β of the wheels 120 and 220 of the first and second trailer sections 100, 200, respectively. During transport, angles α and β are generally substantially zero; while positioning the spooler 300 near the wellhead angles α and β may be increased to preferably 72 degrees and 65 degrees, as described above.

Once spooler 300 is at a desired location, lifts 130 and 230 of first trailer section 100 and second trailer section 200, respectively, may be actuated to lower spooler 300 to the earth's surface. Once at the earth's surface spooler 300 may be detached from first and second trailer sections 100, 200 by removal of pins 330.

As such, the relatively large reel 390 may be transported to the wellhead in a single trip. Further, no cranes nor further assembly is needed at the wellhead. The spooler 300 may be left at the wellhead, and the first trailer section 100 and second trailer section 200 may be utilized for other functions while the spooler 300 remains at the wellhead, further reducing the cost of reel transport.

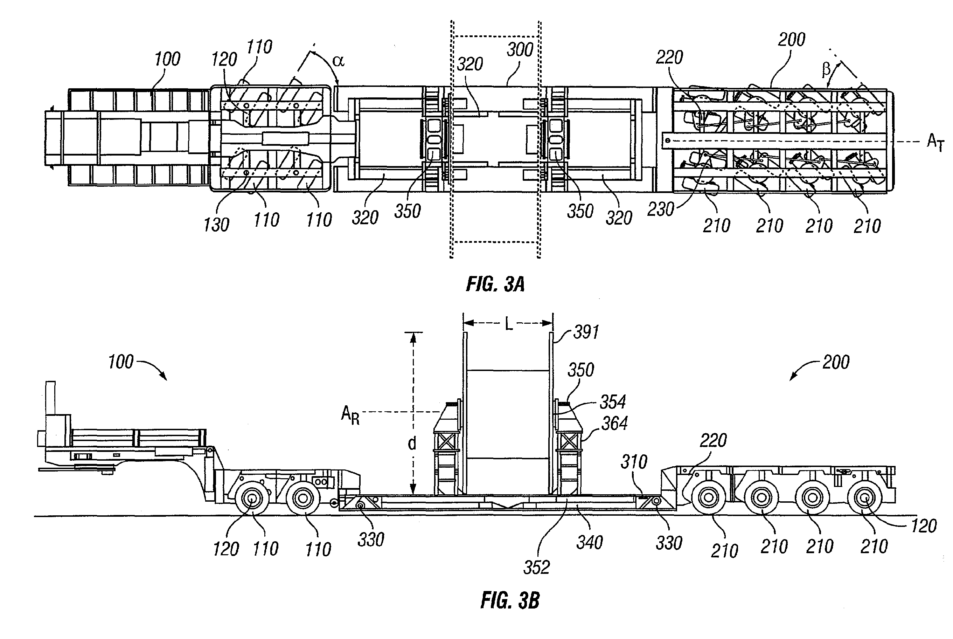

Now referring to Figures 3A and 3B, another embodiment of the present invention is shown. The components and operation of the embodiments of 3A and 3B are substantially similar to those of embodiments 2A and 2B. However, as shown in Figure 3B, a second reel 391 is supported between pedestals 360. The second reel 391 may comprise a prior art split reel having a length "L" of approximately 2.43 meters and a diameter "d" of 4.57 meters. As such when mounted on the pedestals 350 between flanges 354, the second spool 391 is not adapted for transport on existing surface thoroughfares without obtaining special permits as the overall height and width of the spooler 200 and reel 391 exceed the maximum allowed as described above.

To accommodate the shorter reel 391 having a larger diameter than reel 390, pedestals 350 are slidable toward each other via channels 320 in recess 340 of spooler 300 until flanges 354 engage reel 391. To insure the flanges 354 on pedestals 350 engage reel 391 along axis A_{R}, pedestal extensions 364 are provided. Pedestals extensions 364 may be of any length to accommodate a reel 391 of any given diameter. It should be noted that while channels 320 are shown in the spool base 310, which allow pedestals 350 to accommodate reels of various lengths, such channels 320 are not necessary for all embodiments of the present invention. However, by providing channels 320 in base 310 and by providing pedestal extensions 364, spooler 300 is adapted to accommodate reels of various lengths "L" and diameters "d" at the wellhead.

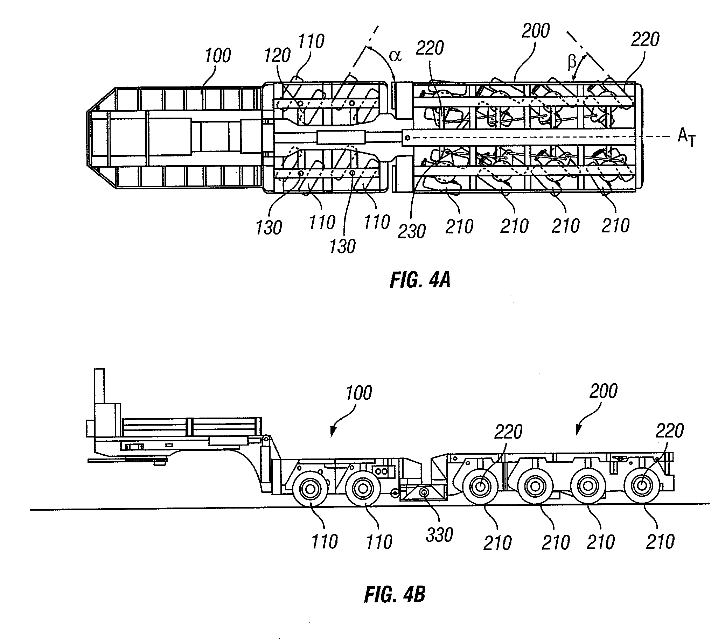

Now referring to Figures 4A and 4B, one embodiment of the present invention is shown in which the first trailer section 100 is directly connectable to second trailer section 200. The various components of the embodiment shown in Figures 4A and 4B operates similarly to those described above. However, it will be noted that spooler 300 is missing from the embodiments of Figures 4A and 4B.

Referring again to the operation of the embodiments described herein, once the spooler 300 has been placed on the ground at a desired location near the wellhead, first trailer section 100 and second trailer section 200 maybe disconnected from spooler 300 by removal of pins 330. First trailer section 100 and second trailer section 200 then may be positioned or rolled away from spooler 300 via wheels 110. First trailer section 100 and second trailer section 200 may also be raised via lifts 130, 230. First trailer section 100 and second trailer section 200 may then be aligned as shown in Figures 4A and 4B and directly connected via pin 330, for example. Although pins 330 have been described herein for connecting the various components, any type of connecting mechanism known to one of ordinary skill in the art having the benefit of this disclosure may be utilized, such as a hitch, etc.

A truck or tractor (not shown) may then be attached to one of the trailer sections, for example the first trailer section 100, and the first and second trailer sections 100, 200 may then be transported to a new location. In this way, the first and second trailer sections 100, 200 and the truck are not required to remain at the wellhead while the coiled tubing is injected into or removed from the wellbore. This feature further reduces the overall cost of transporting the reel of coiled tubing to the wellbore.

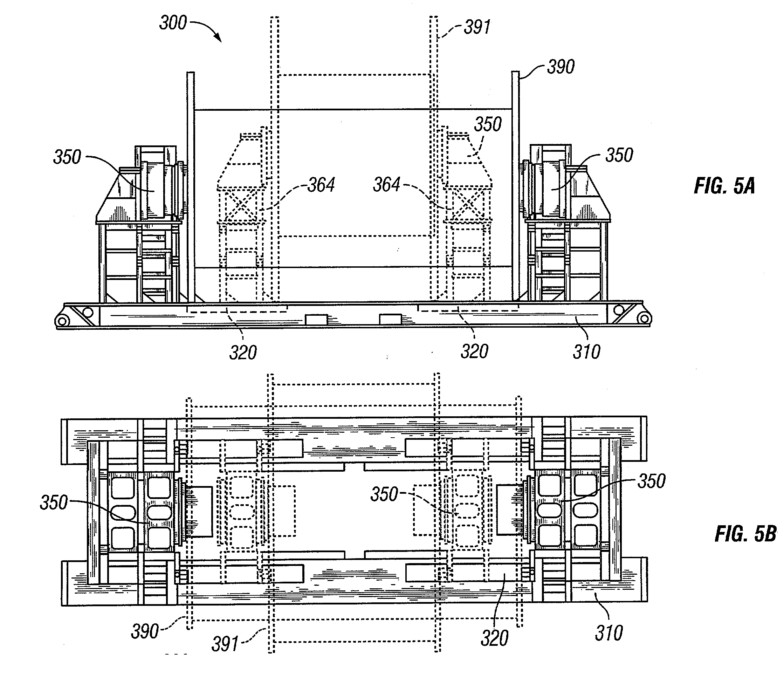

Referring to Figures 5A and 5B, the spooler 300 of the embodiments of Figures 2A and 2B and 3A and 3B are shown in isolation and in more particularity. Figure 5A provides a side view of the spooler 300, while Figure 5B shows a top view of spooler 300.

As shown, at substantially one end of pedestals 350 are racks 252 slidable within channels 320 in base 310. In some embodiments, sliding rams 359 are slidable within channels 320 of base 310. As shown, the spooler 300 is adapted to accommodate a reel 390 having a diameter of 3.498 meters and a length of 5 meters. By adjusting the spacing between the pedestals 350, the spooler 300 may accommodate any size of reel of coiled tubing depending on the length of the channels 320. For instance, the split reels 391 may be accommodated, as shown in cross-hatched form, for use with pedestal extensions 364 the reel 391 having a diameter over 3.5 meters requiring removal for transport.

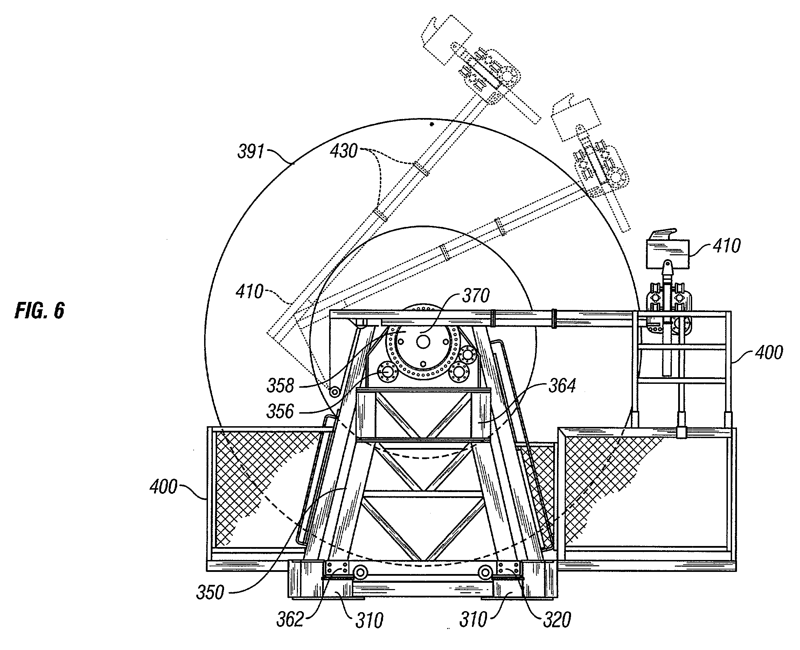

Referring to Figure 6 an embodiment of the present invention is shown with the spooler 300 is in position at the wellhead. As would be known to one of ordinary skill in the art having the benefit of this disclosure, when unspooling the coiled tubing from reel 390 or 391 a levelwind 410 is utilized. The purpose of the levelwind 410 is to guide the coiled tubing string onto the drum, so as to avoid damaging the tubing and to ensure that the entire string can be spooled and unspooled without jamming. The levelwind 410 may function automatically, although limited manual intervention is possible.

As shown in Figure 6, levelwind 410 is pivotally attached to one of the pedestals 350. Levelwind 410 is removed during transport. When it is desired to utilize a larger reel such as second reel 391 having a diameter "d" greater than 3.498 meters, a levelwind extension 430 may be added to levelwind 410. The length of the levelwind extension 430 may be selected such that the levelwind 410 operates properly with any given reel size.

Also shown in this embodiment is motor 370 on pedestal 350. Motor 370 may be any type of motor such as an electric or hydraulic motor operable to spool and unspool the coiled tubing from reels 390 or 391 selectively as desired.

In operation, the motor 370 operates to turn drive gears 356, which rotate drive plate 358, causing the reel 391 to rotate about axis A_{R}.

In the embodiment shown, as the reel 391 is larger than 3.498 meters in diameter, pedestal extensions 364 are also shown. As shown, the outer beams or rails 360 of spooler 300 further comprise a notch 362. Notch 362 may allow the spooler 300 to accommodate reels of coiled tubing of up to 4.2 meters or greater.

Finally, a platform and safety rail extension 400 is shown mounted on spooler 300. Platform and safety rail extension 400 is placed on spooler 300 when the spooler 300 is at the wellhead and coiled tubing is being spooled or unspooled onto reel 390 to protect operators in the vicinity. Platform and safety rail extensions 400 are removable during transport.

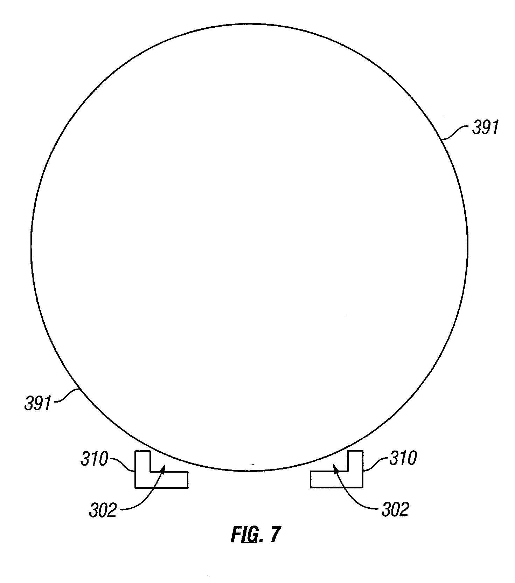

Referring to Figure 7, a simplified view of one embodiment of the present invention is shown in which rails 360 of base 310 comprise a notch 362. Notch 362 allows spooler 300 to accommodate spool 391 during transport as described above.

In this way, a desired linear length of 2 3/8" coiled tubing may be transported along existing thoroughfares without the need of obtaining special permits. Because surface transport may be utilized, the need for water transport and the associated cranes for proper set-up of the spooler is therefore minimized thus reducing the cost of placing coiled tubing at a wellhead. Further, as the wheels of the first and second trailer sections 100 and 200 may be angled with respect to the axis of the trailer sections, the spooler 300 may be placed at a desired location near a wellhead more accurately than previously known with other systems. Further, assembly at the wellhead of the spooler is minimized thus further reducing time and cost of transporting coiled tubing to the wellbore.

While the structures and methods of this invention have been described in terms of preferred embodiments, it will be apparent to those of skill in the art that variations may be applied to the process described herein without departing from the concept, spirit and scope of the invention. All such similar substitutes and modifications apparent to those skilled in the art are deemed to be within the spirit, scope and concept of the invention as it is set out in the following claims.

## Claims

1. A spooler for transporting a reel of coiled tubing to a predetermined location, comprising:
a first pedestal and a second pedestal adapted to mount the reel of coiled tubing therebetween along a reel axis, wherein the spooler is selectively connectable to a trailer having a longitudinal axis, such that the reel axis is substantially parallel to the longitudinal trailer axis.

2. The spooler of claim 1 in which each of the pedestals has a rack that is slideably mounted to a base of the spooler along channels in the base.

3. The spooler of claim 3 in which the channels are positioned in a recess in the base.

4. The spooler of any preceding claim in which the pedestals define a distance therebetween, the distance being selectively varied to accommodate a plurality of reels of different lengths.

5. The spooler of claim 4 in which the channels further comprise a sliding ram operable to automatically adjust the distance via hydraulic power.

6. The spooler of any preceding claim in which the pedestals are slidable within channels in the base to accommodate a first spool having a first diameter and a second spool having a second diameter greater than the first diameter.

7. The spooler of any preceding claim in which each pedestal further comprises a flange adapted to mate with the reel.

8. The spooler of any preceding claim in which at least one of the pedestals further comprises a motor operable to rotate the reel of coiled tubing moveably mounted between the pedestals.

9. The spooler of claim 8 in which the motor comprises a hydraulic motor.

10. The spooler of claim 8 or 9 in which the motor is adapted to rotate a drive gear to rotate a drive plate to rotate the reel.

11. The spooler of any preceding claim in which each pedestal further comprises a pedestal extension, each pedestal extension being connected to each pedestal to accommodate the second reel, the second reel having a diameter greater than a diameter of the first reel.

12. The spooler of any preceding claim further comprising a recess in the base, each pedestal adapted to connect to the base within the recess.

13. The spooler of claim 12 in which the recess is bounded by a plurality of longitudinal rails.

14. The spooler of claim 13 in which the longitudinal rails further comprise a notch adapted to accommodate the reel.

15. The spooler of any preceding claim further comprising a levelwind pivotally attachable to one of the first or second pedestals, the levelwind adapted to guide the coiled tubing as the coiled tubing is unspooled from the reel.

16. The spooler of claim 15 further comprising a levelwind extension on the levelwind such that the levelwind may accommodate the second reel with a larger diameter than a diameter of the first reel.

17. The spooler of any preceding claim further comprising a platform with a safety rail attachable to the spooler.

18. The spooler of any preceding claim in which the reel has a diameter of 3.498 meters, the spooler adapted to transport the reel via existing thoroughfares without obtaining a minor special permit.

19. The spooler as claimed in any of the preceding claims in combination with a first trailer section and a second trailer section defining the longitudinal trailer axis therethrough.

20. The spooler combination of claim 19 in which the spooler is selectively connectable between the first and second trailer sections by pins.

21. The spooler combination of claim 19 or 20 in which each of the first and second trailer sections further comprise a lift adapted to raise and lower each trailer section.

22. The spooler combination of claim 21 in which each lift comprises a hydraulic lift.

23. The spooler combination of claim any of claims 19 to 22 in which the first trailer section is selectively directly connectable to the second trailer section.

24. The spooler combination of any of claims 19 to 23 further comprising a levelwind pivotally attachable to one of the first or second pedestals, the levelwind adapted to guide the coiled tubing as the coiled tubing is unspooled from the spool.

25. The spooler combination of claim 24 further comprising a levelwind extension on the levelwind such that the levelwind may accommodate the second spool with the larger diameter than the first reel.

26. A method for transporting a reel of coiled tubing to a wellhead comprising the steps of:
providing a spooler between a first trailer section and a second trailer section selectively connectable, the reel of coiled tubing being rotatably mounted between two pedestals on the spooler such that a reel axis is substantially parallel to a longitudinal trailer axis;
transporting the spooler to the wellhead;
lowering the first and second trailer sections until the spooler contacts surface; and
disconnecting the spooler from the first and second trailer sections.

27. The method of claim 21 further comprising:
removing the reel from the two pedestals;
adjusting the distance between the two pedestals;
placing a second reel between the two pedestals, the second reel having a diameter larger than a diameter of the first reel.
